# EUROPÄISCHE PATENTSCHRIFT

(11) **EP 2 131 062 B1**
(45) Veröffentlichungstag und Bekanntmachung des Hinweises auf die Patenterteilung: **21.10.2015**
(21) Anmeldenummer: 08010415.1
(22) Anmeldetag: 08.06.2008
(51) Int. Cl.: F16F 9/53

(54) **Elektrorheologischer Aktor zur aktiven Schwingungsdämpfung und Vorrichtung mit einem solchen Aktor**
Electro-rheological actor for active vibration damping and device for said actuator
Actionneur électrorhéologique destiné à l'amortissement de vibrations active et dispositif doté d'un tel actionneur

(43) Veröffentlichungstag der Anmeldung: 09.12.2009
(73) Patentinhaber: GRAMMER AG, 92224 Amberg (DE)
(72) Erfinder: Ulrich, Stephan, Dipl.-Ing., 10409 Berlin (DE); Böhme, Gert, Prof. Dr., 22179 Hamburg (DE); Bruns, Rainer, Prof. Dr., 22395 Hamburg (DE)
(74) Vertreter: Hannke, Christian

(56) Entgegenhaltungen:
- EP-A- 0 315 416
- EP-A- 0 718 523
- DE-A1- 3 731 024
- DE-A1- 10 001 420
- DE-A1- 19 617 839
- DE-A1-102004 043 281
- DE-C1- 10 155 587
- DE-C1- 19 919 876

## Beschreibung

Die Erfindung betrifft einen elektrorheologischen Aktor zur aktiven Schwingungsdämpfung nach Anspruch 1 sowie Vorrichtungen zur aktiven Schwingungsdämpfung mit einem solchen elektrorheologischen Aktor.

Aus mehreren Gründen kann es wünschenswert sein, dass Schwingungen, die von Maschinen oder Motoren erzeugt werden, nicht oder nur reduziert auf die diese Maschinen oder Motoren tragenden Strukturen übertragen werden. Ein Grund ist, dass diese Schwingungen eine mechanische Belastung darstellen, die zur Materialermüdung führen kann. Ein weiterer Grund ist, dass mit diesen Schwingungen erhebliche akustische Belastungen einhergehen. Insbesondere im wehrtechnischen Bereich, wo durch schwingende Maschinen verursachter Schall eine Ortung oder Identifizierung ermöglicht, ist sogar deren möglichst vollständige Verminderung erwünscht.

Es sind z.B. passive Dämpfungssysteme im Stand der Technik bekannt. Z.B. können schwingende Maschinen auf Feder-Dämpfer-Elementen gelagert werden, um die erzeugten Schwingungen nur noch gedämpft in die Umgebung zu übertragen. Die Übertragung der Schwingungen lässt sich jedoch mit solchen Feder-Dämpfer-Elementen nur bis zu einem gewissen Grade reduzieren. Insbesondere im Bereich der charakteristischen Eigenfrequenz des Feder-Dämpfer-Systems wird die Übertragung der Schwingung nicht nur ungenügend reduziert, sondern teilweise sogar erhöht.

Es ist auch bekannt, zur Reduzierung der Übertragung von Schwingungen aktive Aktoren zu verwenden, die durch Erzeugung von gegenphasigen Kräften zu den die Schwingung verursachenden Unwuchtkräften diese teilweise kompensieren. Dieser Kraftausgleich erfolgt durch die Erzeugung von Kräften durch Anregung eines Feder-Masse-Systems durch elektromagnetische oder magnetostriktive Elemente. Allerdings sind die erzeugbaren Kräfte für einen vorgegebenen Bauraum verhältnismäßig gering. Die bekannten Systeme haben also eine geringe Kraftdichte.

Hydraulische Aktoren, die eine sehr viel höhere und damit auch geeignetere Kraftdichte besäBen, eignen sich wegen ihrer zu geringen Dynamik aufgrund mechanisch zu bewegender Ventile nicht. Angestrebter Einsatzbereich wäre etwa ein Frequenzbereich von z.B. 10 Hz bis mehrere kHz. z.B. bis 15 kHz.

Weiterhin ist bekannt, zur Reduzierung der Schwingungen Aktoren einzusetzen, auf denen die Maschine direkt gelagert ist, und die die Übertragung der Schwingungen an das Fundament durch Ausgleich der Wegamplitude zum Teil verhindern (Wegausgleich). Bisherige, aktive hydraulische Lagerungen mit Wegausgleich, die das statische Gewicht der Maschine tragen können, verfügen nur über eine geringe Dynamik.

Elektrorheologische Flüssigkeiten werden in der Schwingungstechnik z.B. in Dämpfern eingesetzt, die z.B. bei Fahrzeugen als Stoßdämpfer Verwendung finden. Bei diesen elektrorheologischen Flüssigkeiten handelt es sich in der Regel um Suspensionen, das heißt um in einem flüssigen Trägermedium suspendierte Festpartikel, die in einem äußeren elektrischen Feld polarisierbar sind. Durch Anlegen und Verändern eines elektrischen Felder können die rheologischen Eigenschaften solcher Flüssigkeiten verändert werden. Bei den bekannten, mit elektrorheologischen Flüssigkeiten gefüllten Dämpfern kann deren Dämpferkennlinie verändert werden durch Einstellung des zwischen Kondensatorplatten erzeugten elektrischen Feldes, wobei die Dämpferflüssigkeit durch im Bereich der Kondensatorplatten ausgebildete Engstellen fließen muß. Bei Erhöhung der Feldstärke erhöht sich auch der Fließwiderstand. Durch die Veränderbarkeit der Kennlinie lässt sich zwar der Einsatzbereich solcher Dämpfer erweitern, eine aktive Schwingungsdämpfung ist jedoch nicht möglich.

Die DE 100 01 420 A1 beschreibt ein solches passives Dämpfungselement, das eine elektrorheologische Flüssigkeit verwendet, die zwischen zwei über eine Verbindung kommunizierende Kammern verfügt. Der Fluss der elektrorheologischen Flüssigkeit zwischen den Kammern wird durch Anlegen elektrischer Felder im Verbindungsbereich erschwert oder erleichtert, so dass sich die Dämpfungscharakteristik über die elektrische Feldstärke einstellen lässt. In ähnlicher Weise arbeitet der in der DE 199 19 876 C1 gezeigte Dämpfer, der ebenfalls zwei mit elektrorheologischer Flüssigkeit gefüllte Kammern offenbart, die mittels umlaufender Überströmkanäle in Verbindung stehen.

Weitere passive Dampfüngselemente zeigen z.B. die EP 0 718 523 A1, die EP 0 750 133 A1 und die EP 0 769 637 A2. In den Zylindern dieser Schwingungsdämpfer wird eine elektrorheologische Flüssigkeit mittels elektrischer Felder in ihrer Viskosität beeinflusst, so dass sich die Dämpfungscharakteristik des Dämpfers einstellen lässt. Auch die DE 10 2004 043 281 A1 betrifft einen solchen passiven Schwingungsdämpfer. Weitere Beispiele sind die DE 10 2004 058 736 A1, die DE 4120 099 A1 sowie die DE 198 16 549 A1.

Einen aktiven Schwingungsdämpfer auf Basis elektrorheologischer Flüssigkeiten zeigt die EP 0 315 416 A2. Es wird dort ein in einem Zylinder bewegbarer Kolben gezeigt, der den Zylinder in zwei Kammern unterteilt. Jede Kammer verfügt über eine eigene Ein- und eine eigene Auslassöffnung, über die elektrorheologische Flüssigkeit in die Kammern hinein- bzw. aus den Kammern herausströmen kann. Die Ein- bzw. Auslässe werden mit Strom beaufschlagt, so dass sich dort elektrische Felder ausbilden, die die Fließeigenschaften der elektrorheologischen Flüssigkeit beeinflussen. Bei geeigneter Strombeaufschlagung kann z,B. der Druck in einer der Kammern gegenüber dem Druck in der anderen Kammer erhöht werden, so dass sich der Kolben zu der Kammer mit dem geringeren Druck verschiebt. In analoger Weise kann der Kolben in die entgegengesetzte Richtung verschoben werden. Bei periodischer Ausführung kann so eine Schwingung des Kolbens erzeugt werden.

Es ist die Aufgabe der vorliegenden Erfindung, einen kompakten und konstruktiv einfachen Aktor zu schaffen, der basierend auf der Verwendung einer elektrorheologischen Flüssigkeit für die aktive Schwingungsdämpfung einzusetzen ist, und dabei die Vorteile der hohen Kraftdichte elektrorheologischer Aktoren mit hoher Dynamik verbindet. Weiterhin ist eine Aufgabe der vorliegenden Erfindung für die aktive Schwingungsdämpfung geeignete Vorrichtungen mit solchen Aktoren aufzuzeigen.

Diese Aufgabe wird durch einen Aktor nach Anspruch 1 und durch eine Vorrichtung nach Anspruch 11 gelöst. Weitere vorteilhafte Ausgestaltungen sind Gegenstand der Unteransprüche.

Der erfindungsgemäße Aktor besteht aus einem einteilig oder mehrteilig ausgebildeten Aktorgehäuse, das eine Aktorkammer umgibt. Im Betrieb werden am Ein- und Auslaß des Aktors Hydraulikleitungen eines Hydraulikkreislaufs angeschlossen, sodaß der Aktor vom Ein- zum Auslaß durch die Aktorkammer hindurch von einer elektrorheologischen Flüssigkeit durchströmt wird. Es kann dabei eine beliebige elektrorheologische Flüssigkeit verwendet werden, insbesondere z.B. Rheoil 3.0. Für den Betriebsdruck im Hydraulikkreislauf kann z.B. eine übliche Pumpe sorgen.

Ein elektrorheologisches Ventil beherrscht die den Aktor durchströmende Flüssigkeit, wobei sich ein elektrorheologisches Ventil gegenüber anderen Ventilen dadurch auszeichnet, daß dieses Ventil spannungsbeaufschlagbare Elektroden aufweist, die isoliert voneinander stehende Kondensatorflächen bilden, zwischen denen ein Lumen in Form eines Spaltes verbleibt, durch den die zu beherrschende Flüssigkeit strömt. Typische Spalte haben eine Höhe von wenigen Zehntel bis einige Millimeter. Die Elektroden werden von einer Spannungsquelle mit elektrischer Spannung versorgt. Die Schaltung des Ventils kann z.B. durch An- bzw. Abschalten der Elektrodenspannung erfolgen, oder durch kontinuierliche Regelung der an die Elektroden angelegten Kondensatorspannung.

Der erfindungsgemäße Aktor weist einen Gehäusewandbereich auf, der auslenkbar ist. Darunter ist zu verstehen, daß es Gehäusebereiche gibt, die in Ruhestellung bleiben und einen sich demgegenüber bewegbaren Gehäusebereich. Diese Bereiche umgeben zusammen die Aktorkammer. Außerhalb dieser Aktorkammer ist ein Kolben angeordnet, der an dem auslenkbaren Wandbereich befestigt ist, und die Auslenkungen des Wandbereiches mit vollzieht. Der auslenkbare Wandbereich ist in Strömungsrichtung vor dem Ventil angeordnet, so daß z.B. bei Vorgabe eines bestimmten Strömungsvolumens durch die Aktorkammer durch Erhöhung respektive Einschalten des elektrischen Feldes im elektrorheologischen Ventil der Druck in der Aktorkammer erhöht werden kann. Infolge dieser Erhöhung wird der auslenkbare Wandbereich und damit auch der Kolben nach außen gedrückt. Wird umgekehrt der Strömungswiderstand durch Erniedrigen respektive Abschalten des elektrischen Felder im Ventil reduziert, so wird der auslenkbare Wandbereich ins Aktorinnere bewegt. Erneut macht der Kolben diese Bewegung mit. Bei periodischer Variation des elektrischen Feldes, z.B. periodischem An- und Abschalten der Spannung, kann mit dem erfindungsgemäßen Aktor eine periodische Kolbenbewegung generiert werden. Die Frequenz der Schwingung ist dabei durch die An- und Abschaltfrequenz definiert. Die Schwingungsamplitude kann z.B. durch Änderung der Spannungsamplitude gesteuert werden.

Der auslenkbare Wandbereich kann in einfacher Weise von einer Membran gebildet werden, z.B. von einer metallischen Membran, die am umgebenden Grehäuse befestigt ist, z.B. durch Klemmung. Geeignet sind insbesondere Rollmembranen, die eine ausreichende Auslenkungsamplitude erlauben.

Für das elektrorheologische Ventil gilt, dass der Einfluß der Veränderung des elektrischen Feldes zwischen den die Kondensatorflächen ausbildenden Elektroden auf den Strömungswiderstand um so größer ist, je größer die Weglänge durch den elektrischen Feldbereich ist, also je länger der Strömungsweg durch die Kondensatorplatten hindurch führt, und je größer das vom elektrischen Feld durchdrungene Lumen ist Das elektrorheologische Ventil könnte z.B. im Auslaß angeordnet werden, bzw. der Auslaß könnte das elektrorheologische Ventil bilden. Das würde allerdings auch bedeuten, dass wenig Platz für die Kondensatorflächen zur Verfügung stünde und die Spaltlänge zwischen diesen Kondensatorplatten wäre vergleichsweise gering. Es ist deshalb bevorzugt, diesen Größenbeschränkungen aus dem Wege zu gehen, indem das elektrorheologische Ventil in der Aktorkammer angeordnet ist Die Kondensatorflächen und die Spaltlänge können dadurch vergrößert werden.

Eine große Spaltlänge wird bevorzugt dadurch erreicht, dass die Elektroden des elektrorheologischen Ventils in mehreren Ebenen in geringem Abstand voneinander und im Vorzeichen alternierend angeordnet sind, und einen mehrfach gewundenen Spalt zwischen sich ausbilden.

Eine kompakte Bauart bei gleichzeitig sehr großer Spaltlänge kann erreicht werden durch die bevorzugte zylinderförmige Ausbildung des Aktorgehäuses, in dem die Elektroden radial außen und quer zur Zylinderachsrichtung als Ringscheiben ausgebildet in der Aktorkammer angeordnet sind. Es ist weiterhin bevorzugt, dass der auslenkbare Wandbereich mittig in einer Stirnseite des zylindrischen Gehäuses angeordnet ist. Es sind dazu auch alternative Bauarten möglich, z.B. eine würfelförmige Bauweise. Auch hier wären die Elektroden bevorzugt als Scheiben auszubilden, z.B. als rechteckige oder quadratische Scheiben.

Der der Bewegung des auslenkbaren Wandbereich folgende Kolben ist bevorzugt in seiner Bewegung geführt. Es ist weiterhin bevorzugt, dass keine zusätzliche Führung vorgesehen ist, sondern dass der den auslenkbaren Wandbereich umgebende Aktorgehäusebereich zur axialen Führung des Kolbens ausgebildet ist. Dieser Gehäusebereich kann z.B, eine zum Kolben komplementäre Aussparung haben, in der sich der Kolben in axialer Richtung frei bewegen kann, aber gegen Kippbewegung gesichert ist.

Für die Erzeugung ausreichender Kräfte muß eine gewisse Masse in Schwingung versetzt werden. Daher trägt der Kolben bevorzugt eine Schwungmasse. Weiterhin ist es z.B. aus Sicherheitsgründen vorteilhaft, den Kolben mit der Schwungmasse zusammen in einer von der Aktorkammer getrennten Kolbenkammer anzuordnen, wobei diese Kolbenkammer insbesondere begrenzt sein kann vom Aktorgehäuse und einer daran befestigen Abdeckung.

Es ist bevorzugt, dass der Kolben z.B. mittels Rückstelleinrichtungen in seine Ruhestellung zurückkehrt. Es könnten als Rückstelleinrichtungen z.B. rückstellende Federn zwischen dem Aktorgehäuse und dem Kolben angebracht werden. Eine einfache Ausbildung einer Rückstelleinrichtung besteht darin, die Kolbenkammer unter Überdruck zu halten. Sie ist dazu z.B. mit Druckluft befüllt, so dass der in der Kolbenkammer herrschende Überdruck die schnellere Rückkehr der ausgelenkten Kolbens in den Ruhezustand bewirkt, wenn das elektrorheologische Ventil in den Ausgangszustand zurückkehrt.

Der Aktor weist bevorzugt nicht nur ein, sondern zwei elektrorheologische Ventile auf, von denen eines in Strömungsrichtung vor und eines nach dem auslenkbaren Wandbereich angeordnet ist. Eines der Ventile steuert also den Zufluß und eines den Abfluß, Durch wechselnde Erhöhung des Strömungswiderstandes in den beiden Ventilen kann der Druck in der Aktorkammer erhöht werden, ohne dass dies eine Druckveränderung im Hydrauliksystem zur Folge hat.

Eine erfindungsgemäße Vorrichtung zur aktiven Schwingungsdämpfung weist einen wie vorab beschriebenen elektrorheologischen Aktor auf, der in einem Hydraulikkreislauf für elektrorheologische Flüssigkeit angeordnet ist, wobei die elektrorheologische Flüssigkeit vom Einlaß zum Auslaß durch den Aktor strömt. Weiterhin hat die Vorrichtung eine Spannungsversorgung, die die Elektroden des elektrorheologischen Ventils mit Spannung versorgt. Ein Schwingungssensor, z.B. ein Beschleunigungssensor, der die zu dämpfende Schwingung erfasst, also z.B. an der schwingenden Maschine angeordnet ist, ist mit der Steuereinrichtung verbunden und liefert an diese seine Meßdaten über die zu kompensierende Schwingung. Die Steuereinrichtung errechnet aus diesen Meßdaten Phase und Amplitude der vom Aktor zu erzeugenden Kompensationsschwingung, und steuert entsprechend die Spannung der Elektroden des elektrorheologischen Ventiles oder der Ventile.

Bevorzugt hat die Vorrichtung einen weiteren Schwingungssensor, der die nach der Dämpfung noch verbleibende Schwingung erfasst und Meßdaten an die Steuereinrichtung liefert. Dieser Sensor kann zur Nachregelung der Elektrodenspannung verwendet werden, indem die Spannung durch Anpassung von Amplitude und Phase so verändert wird, dass die vom weiteren Sensor gemessene Restschwingung minimiert wird.

Bevorzugt hat die Vorrichtung mehrere Aktoren, die weiterhin bevorzugt einzeln gesteuert sind. Generell lassen sich Schwingungen besser mit mehreren Aktoren kompensieren, und es können bei Verwendung mehrerer Aktoren z.B. auch komplexe Schwingungen aktiv gedämpft werden. Mit komplexen Schwingungen sind sowohl Schwingungen mit Anteilen unterschiedlicher Frequenz gemeint, als auch in mehrere Raumrichtungen überlagerte, mehrdimensionale Schwingungsbewegungen.

Mit Vorteil versorgt eine Pumpe den elektrorheologischen Aktor mit einem konstanten Volumenstrom an elektrorheologischer Flüssigkeit. Unter dieser Voraussetzung kann durch die Veränderung des elektrischen Feldes der Druck im Aktor und damit auch die Auslenkung der Membran gesteuert werden. Der Volumenstrom muß aber nicht mathematisch exakt konstant gehalten werden, sondern es sind Schwankungen unbedenklich, wie sie bei normalen Pumpenbetrieb aufgrund von Leistungsschwankungen und Reaktionszeiten vorkommen. Es ist in der Regel ausreichend, einen üblichen Pumpenmotor mit konstanter Leistung zu betreiben.

Gegenüber einem offenen Hydraulikkreislauf hat ein geschlossener Kreislauf den Vorteil, dass z.B. für den Wegausgleich mit einem günstigen Betriebsdruck gearbeitet werden kann, der z.B. oberhalb des Umgebungsdruckes liegt. Dadurch kann z.B. der statische Druck einer auf dem Aktor gelagerten Maschine aufgefangen werden und muß nicht zusätzlich zur Förderleistung von der Pumpe aufgebracht werden.

Durch die Anordnung von einem oder mehreren Hydrospeichern im Hydraulikkreislauf ist ein Ausgleich von Volumenveränderungen im Hydraulikkreislauf gewäbrleistet die unter anderem durch die Auslenkung der Membran auftreten wird. Weiterhin ermöglichen die Hydrospeicher, dass der gewünschte statische Druck im Hydrauliksystem über eine lange Dauer und relativ konstant aufrechterhalten bleibt.

Nachfolgend soll die Erfindung anhand von Ausführungsbeispielen erläutert werden, die in den Figuren vereinfacht und schematisch dargestellt sind. Es zeigen:
- Fig. 1: eine Schnittansicht durch ein erstes Ausführungsbeispiel eines zylinderförmigen elektrorheologischen Aktors zur aktiven Schwingungsdämpfung durch Kraftausgleich,
- Fig. 2: ein zweites Ausführungsbeispiel eines zylinderförmigen elektrorheologischen Aktors zur aktiven Schwingungsdämpfung durch Wegausgleich,
- Fig.3: eine Prinzipdarstellung einer Vorrichtung zur aktiven Schwingungsdämpfung mit einem erfindungsgemäßen, elektrorheologischen Aktor nach einem ersten Ausführungsbesipiel,
- Fig. 4: ein weiteres Beispiel einer Vorrichtung zur aktiven Schwingungsdämpfimg in einer Prinzipdarstellung,
- Fig. 5: ein drittes Ausführungsbeispiel für eine Vorrichtung zur aktiven Schwingungsdämpfung mit einem elektrorheologischen Aktor,
- Fig. 6: eine Prinzipzeichnung zur möglichen Anordnung erfindungsgemäßer elektrorheologischer Aktoren,
- Fig. 7, Fig. 8: zwei weitere Ausführungsbeispiele für die prinzipielle Anordnung erfindungsgemäßer, elektrorheologischer Aktoren zur aktiven Schwingungsdämpfung, und
- Fig. 9: ein Anwendungsbeispiel für den Einsatz mehrerer erfindungsgemäßer, elektrorheologischer Aktoren für die Rotorlagerung.

Elektrorheologische (ER) Flüssigkeiten verändern ihre Viskosität in Abhängigkeit eines elektrischen Feldes. Wird diese ER Flüssigkeit durch einen Spalt mit einer Höhe von wenigen zehntel bis einigen Millimetern gepresst, der durch zwei Elektroden begrenzt ist, so kann durch Veränderung des elektrischen Feldes der Druckabfall über die Länge des Spaltes bei einem gegebenen Volumenstrom reguliert werden. Oder es kann bei einer vorgegebenen Druckdifferenz der Volumenstrom durch den Spalt reguliert werden. Im Folgenden werden mögliche Ausführungen von ER Aktoren zur Schwingungskompensation beschrieben, die diesen Effekt nutzen.

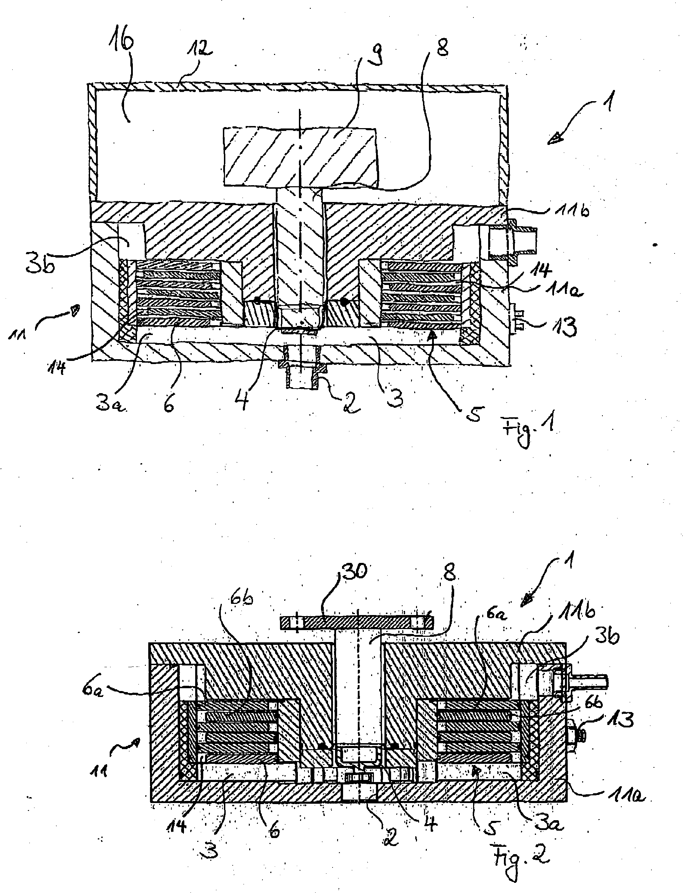

In Fig. 1 ist ein ER zylinderförmiger Aktor 1 dargestellt, mit dem Kräfte erzeugt werden können. Über einen Hydraulikeinlass 2 wird die ER Flüssigkeit mit konstantem Volumenstrom in die Aktorkammer 3 geführt, die durch eine Membran 4 nach oben abgeschlossen ist. In der Aktorkammer 3 ist das ER Ventil 5 angeordnet. Das Ventil 5 besteht aus mehreren übereinander gestapelten Elektroden 6, zwischen denen ein Spalt 14 ausgebildet ist. Die Elektroden 6 sind in diesem Ausführungsbeispiel ringförmige Scheiben, die radial außen in der Aktorkammer 3 angeordnet sind und diese in einen unteren und einen oberen Ringkammerbereich 3a, 3b unterteilen. Die über den Einlass 2 zugeführte ER Flüssigkeit fließt durch den unteren Ringkammerbeich 3a, durch das ER Ventil 5 und wird durch den Auslass 7 wieder in den nicht dargestellten Hydraulikkreislauf zurückgeführt.

Auf der Membran 4 ist ein Kolben 8 fixiert, auf dem eine Schwungmasse 9 befestigt ist. Kolben 8 und Schwungmasse 9 sind in einer Kolbenkammer 16 angeordnet, die vom oberen Teil 11b des zweigeteilt ausgebildeten Aktorgehäuses 11 und einer daran befestigten Abdeckung 12 umgeben ist. Die Kolbenkammer 16 ist mit Druckluft befüllt.

Das Aktorgehäuse 11 hat einen Spannungsanschluss 13, an den eine nicht dargestellte Spannungsquelle angeschlossen werden kann. Die Elektroden 6 stehen elektrisch leitend mit dem Spannungsanschluß 13 in Verbindung, wobei alternierend eine Elektrode 6a mit dem Pluspol und eine Elektrode 6b mit dem Minuspol verbunden ist, so daß sich dazwischen ein elektrisches Feld im Bereich des zwischen den Elektroden 6a, 6b verlaufenden Spaltes 14 ausbilden kann. Der Fluß der ER Flüssigkeit durch das ER Ventil 5 erfolgt durch diesen feldbeaufschlagbaren Spalt 14.

Durch Anlegen einer Spannung an die Elektroden 6 wird der Druck in der Aktorkammer 3 verändert. Bei Vergrößerung des Druckes wird der Kolben 8 mit der Schwungmasse 9 nach oben bewegt. Bei einer Verringerung des Druckes bewegt sich die Masse 9 durch ihre Gewichtskraft und die Rückstellkraft aufgrund der Druckluft wieder nach unten. Durch die beschleunigte Bewegung der Masse 9 erzeugt der Aktor eine äußere Kraft.

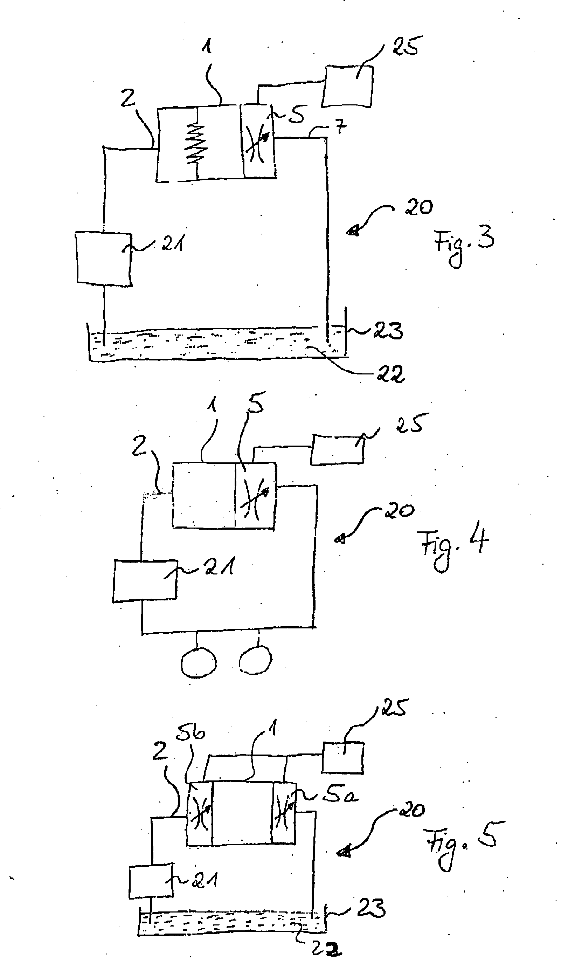

Der bisher beschriebene Aktor der Figur 1 kann, wie in Fig. 3 dargestellt, Bestandteil eines offenen Hydraulikkreislaufes 20 sein. Eine motorgetriebene Pumpe 21 treibt in diesem Kreislauf 20 die ER Flüssigkeit 22 mit einer konstanten Geschwindigkeit an. Die Pumpe 21 fördert so einen konstanten Volumenstrom der ER Flüssigkeit 22 aus dem Tank 23 in den Aktor 1. Mittels des ER Ventils 5 wird der Druck im Aktor 1 gesteuert. Hinter dem Ventil 5 fließt die ER Flüssigkeit 22 zurück in den Tank 23. Die Steuerung des ER Ventile 5 übernimmt dabei eine Steuereinrichtung 25, auf die später noch einzugehen ist.

Fig. 2 zeigt ein zweites Ausführungsbeispiel, nämlich einen ER Aktor 1 für den Betrieb im Wegausgleich. Im Vergleich zum ER Aktor 1 für den Kraftausgleich gemäß Fig. 1 ist auf die Abdeckung 12 verzichtet worden. Anstatt der Schwungmasse 9 trägt der Kolben 8 einen Flansch 30, auf dem direkt die Maschine oder das Aggregat, dessen Schwingungen kompensiert werden sollen, gelagert wird. In den übrigen Merkmalen besteht konstruktive Übereinstimmung.

In diesem Ausführungsbeispiel der Figur 3 soll der ER Aktor 1 die Wegamplituden einer nicht dargestellten schwingenden Maschine durch Bewegung der Membran 4 ausgleichen. Dafür ist der Aktor 1 Teil eines Hydraulikkreislaufes 20, wie in Fig. 4 dargestellt, der für einen konstanten Öldruck im Aktor 1 sorgt. Durch Steuerung des ER Ventils 5 wird bei einer konstanten Druckdifferenz der Volumenstrom durch das Ventil 5 geregelt, wodurch die Bewegung der Membran 4 der schwingenden Maschine angepasst werden kann. Zur Erhöhung des Druckes im Aktor, und damit zur Erweiterung der Tragfähigkeit des Aktors, wird ein geschlossener Hydraulikkreislauf verwendet. Anstelle eines Tankes (23, Figur 3) werden Hydrospeicher verwendet. Dadurch sinkt der Druck hinter dem Ventil 5 nicht auf Umgebungsdruck ab. Es können je nach Bedarf auch mehrere Aktoren 1 zur Lagerung der Maschine eingesetzt und einzeln angesteuert werden.

Eine weitere Möglichkeit, den Druck in der Aktorkammer 3 des Aktors 1 zu steuern, ist in Fig. 5 dargestellt. Dabei wird zusätzlich zu dem ersten, hinter der Membran angeordneten ER Ventil 5a, das den Abfluß der ER Flüssigkeit aus der Aktorkammer 3 beherrscht, auch der Einlauf durch ein ER Ventil 5b reguliert, das vor der Membran 4 angeordnet ist. Durch wechselnde Erhöhung des Strömungswiderstandes in den beiden Ventilen 5a, 5b kann der Druck in der Aktorkammer 3 verändert werden, ohne dass dies eine Druckänderung im Hydrauliksystem 20 zur Folge hat.

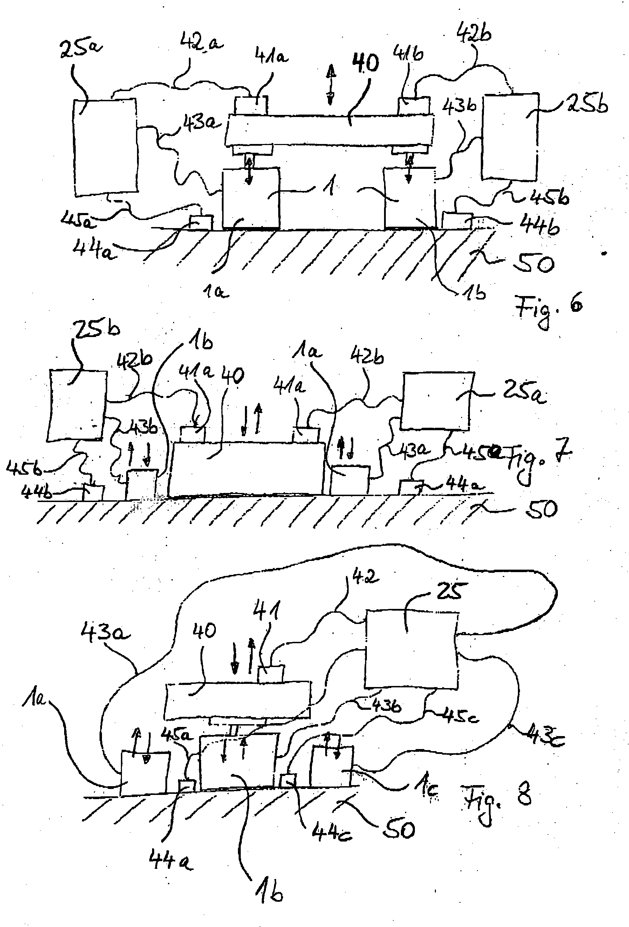

Die Figuren 6, 7 und 8 zeigen beispielhafte Anordnungen von ER Aktoren 1, die Schwingungen eines Motors 40 kompensieren sollen. Anhand dieser Figuren soll auch die Steuerung der Aktoren 1 durch die Steuereinrichtung 25 näher erläutert werden. Zur Vereinfachung der Darstellung sollen die Steuereinrichtungen der Figuren 6, 7 und 8 sowohl eine Spannungsquelle als auch die für die Erzeugung des Hydraulikkreislaufes erforderlichen Einrichtungen beinhalten, welche üblicherweise aber als von der Steuerung getrennte Baugruppen verwirklicht werden. Die Steuereinrichtung könnte aber z.B. auch in den Aktor integriert werden, während die Spannungsversorgung und die Hydraulikkomponenten davon getrennte Baueinheiten sind. Sowohl die Strom- als auch die ER Hydraulikflüssigkeitsversorgung der Aktoren erfolgt durch die vereinfacht dargestellt Versorgungsleitung 43, die also Stromleitungen und hydraulische Leitungen aufweist

Der schwingende Motor 40 ist in Figur 6 auf zwei Aktoren 1a, 1b gelagert, die zum Wegausgleich ausgebildet sind, z.B. gemäß den Figuren 2 und 4. Jeder der Aktoren 1a und 1b wird von einer eigenen Steuereinrichtung 25a, 25 angesteuert und mit Strom und Hydraulikflüssigkeit über Versorgungsleitungen 43a bzw. 43b versorgt. Beschleunigungssensoren 41a und 41b sind an dem Motor 40 angebracht und erfassen dessen schwingende Bewegung. Die von den Beschleunigungssensoren 41a, 41b gewonnenen Meßdaten werden über Datenleitungen 42a und 42b an die zugeordneten Steuereinrichtungen 25a, 25b weitergegeben. Die mit ausreichender Rechenleistung ausgestatteten Steuereinrichtungen 25a, 25b errechnen aus den übergebenen Meßdaten, mit welcher Amplitude und mit welcher Phase der jeweilige Aktor 1a bzw. 1b den Wegausgleich bewirken muß. Entsprechend dieser errechneten Werte werden die (nicht dargestellten) ER Ventile der Aktoren 1a und 1b über die Versorgungsleitungen mit Spannung beaufschlagt, so daß der Druck in der Aktorkammer des Aktors 1a, 1b in der errechneten Weise ab- und zunimmt, wodurch die Membran und der daran befestigte Kolben in der benötigten Weise ausgelenkt werden.

Zur vollständigen Schwingungskompensation müßte dieser Steuerungsprozess in Echtzeit erfolgen. Allerdings haben die verschiedenen Systemteile Reaktions- und Totzeiten. Es sind deshalb zwei weitere Sensoren 44a und 44b auf der die Aktoren 1a, 1b tragenden Struktur 50 angeordnet, die die von den Aktoren 1a, 1b noch durchgelassenen Schwingungen erfassen. Auch diese zusätzlichen Sensoren 44a und 44b stehen jeweils über eigene Datenleitungen 45a, 45b in Verbindung mit der zugeordneten Steuereinrichtung 25a bzw. 25b, welche aus den Meßdaten der zusätzlichen Sensoren 44a, 44b eine Optimierung der Steuerung der Aktoren errechnet Regelungstechnisch kann dies z.B. dadurch umgesetzt werden, daß zunächst eine Vorsteuerung anhand der Beschleunigungssensoren 41a, 41b erfolgt. Dazu wird das elektrische Feld der ER Ventile der Aktoren 1a, 1b von einem internen Regler der Steuereinrichtung 25a, 25b geregelt, welcher ein Stellsignal für die Regelung der Aktoren erhält Die Meßdaten der zusätzlichen Sensoren 44a, 44b werden einer Optimierungsroutine zugeführt, die das an den internen Regler gegebene Stellsignal anpasst.

In Figur 7 liegt der schwingende Motor 40 direkt auf einer Trägerstruktur 50 auf. Neben dem Motor 40 sind zwei Aktoren 1a und 1b angeordnet, die für den Kraftausgleich ausgebildet sind, z.B. gemäß der Figuren 1 und 3, und die beiden ebenfalls auf der Trägerstruktur 50 aufliegen Jeder Aktor 1a, 1b wird von einer eigenen Steuereinrichtung 25a bzw. 25 b gesteuert, und jeder Steuereinrichtung 25a bzw. 25 b sind Sensoren 41a bzw. 41b über Datenleitungen 42a, 42 b und Zusatzsensoren 44a, 44b über Datenleitungen 45a, 45 b angeschlossen. Die Steuerung der Aktoren erfolgt analog zum zuvor geschilderten Beispiel, wobei die Aktoren der Figur 7 nicht zum Weg-, sondern zum Kraftausgleich angesteuert werden. Die von den Aktoren 1a, 1b erzeugten Kräfte sollen also die vom Motor 40 auf die Trägerstruktur 50 übertragenen Kräfte kompensieren.

Die in Figur 8 dargestellte Anordnung ist eine Kombination aus einem Aktor für den Wegausgleich, nämlich Aktor 1b, und zwei Aktoren für den Kraftausgleich, nämlich den beiden Aktoren 1a, 1c. Anders als in den Figuren 6 und 7 werden alle diese Aktoren 1a, 1b, 1c gemeinsam von einer einzigen Steuereinrichtung 25 gesteuert, zu der alle Datenleitungen 42, 45a, 45b führen, und die alle Aktoren 1a, 1b, 1c über Versorgungsleitungen 43a, 43b, 43c versorgt. Es kann für mehrere, z.B. alle Aktoren eine gemeinsame Spannungsquelle vorgesehen sein, oder jeder Aktor hat seine eigene Spannungsquelle. Analog kann jeder Aktor an einem eigenen Hydraulikkreislauf angeschlossen sein, oder mehrere Aktoren sind in einem gemeinsamen Kreislauf integriert. Die Steuereinrichtung kann z.B. für jeden Aktor 1a, 1b, 1c einen eigenen internen Regler mit eigener Optimierungsroutine haben.

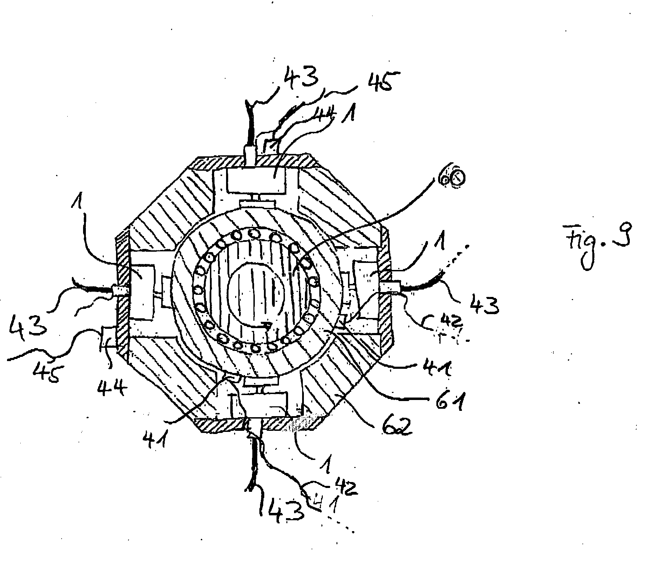

Fig. 9 zeigt ein Beispiel für den Einsatz erfindungsgemäßer Aktoren 1 bzw. ein Beispiel einer erfindungsgemäßen Vorrichtung, nämlich eine schwingungsgedämpfte Lagerung für einen Rotor 60. Die alle mit Bezugszeichen 1 bezeichneten Aktoren sind für Wegausgleich ausgebildet, z.B. gemäß den Ausführungsbeispielen in den Figuren 2 und 4, und sind symmetrisch um die Rotorachse des Rotors 60 angeordnet, welcher über ein Radiallager 61 auf den vier jeweils um 90° versetzt zueinander angeordneten Aktoren 1 gelagert ist Die z.B. aufgrund einer Unwucht auftretenden periodischen Auslenkungen des Rotors 60 werden von den Aktoren 1 durch Wegausgleich kompensiert und somit nicht an die Umgebung übertragen, z.B. nicht auf das Lagergehäuse 62. Nicht gezeigt sind die Steuereinrichtung sowie die Versorgunsgseinrichtungen wie eine Spannungsquelle und ein Hydraulikkreislauf. Es sind lediglich noch die zu den Aktoren 1 führenden Versorgungsleitungen 43 angedeutet. Am Radiallager sind zwei Beschleunigungssensoren 41 angeordnet, die ihre Daten über Datenleitungen 42 an die Steuereinrichtung weitergeben. Außen am Lagergehäuse sind weitere Sensoren 44 angebracht, die nicht kompensierte Schwingungen erfassen. In dem gezeigten Beispiel könnten sich gegenüberliegende Aktoren synchronisiert angesteuert werden. Wenn z.B. einer der sich gegenüberliegenden Aktoren zu einer bestimmten Wegauslenkung angesteuert wird, kann synchron und simultan der gegenüberliegende Sensor zu einer entgegengesetzten Wegauslenkung angesteuert werden. Im Übrigen kann zur Steuerung auf die Erläuterungen zu den Figuren 6 bis 8 verwiesen werden.

Aufgrund der hohen Leistungsdichte von hydraulischen Aktoren sind bei den erfindungsgemäßen Aktoren bei gleicher Baugröße höhere Kräfte als mit herkömmlichen Aktoren auf elektromagnetischer oder magnetostriktiver Basis möglich. Mit der Verwendung von elektrorheologischen Ventilen zur Steuerung des Druckes bzw. Volumenstroms in der Aktorkammer lassen sich sehr viel kürzere Schaltzeiten als mit mechanisch wirkenden Hydraulikventilen realisieren. Die Ventile unterliegen zudem keinem mechanischen Verschleiß.

## Patentansprüche

1. Elektrorheologischer Aktor (1, 1a, 1b, 1c) zur aktiven Schwingungsdämpfung, mit einem Aktorgehäuse (11, 11a, 11b), das eine Aktorkammer (3, 3 a, 3b) umgibt, wobei das Aktorgehäuse (11, 11a, 11b) einen Ein- (2) und einen Auslaß (7) aufweist, an die Hydraulikleitungen anschließbar sind zur Erzeugung eines Volumenstromes einer elektrorheologischen Flüssigkeit entlang eines Strömungsweges vom Einlaß (2) durch die Aktorkammer (3, 3a, 3b) zum Auslaß (7), wobei der Volumenstrom beherrscht ist von einem elektrorheologischen Ventil (5, 5a, 5b) mit spannungsbeaufschlagbaren Elektroden (6, 6a, 6b), die Kondensatorflächen bilden und zwischen denen ein Spalt (14) verbleibt, der einen Teil des Strömungsweges bildet, **dadurch gekennzeichnet, dass** ein Wandbereich (4) des Gehäuses (11, 11a, 11b) auslenkbar ausgebildet ist, und ein Kolben (8) sich mit dem auslenkbaren Wandbereich (4) außerhalb der Aktorkammer (3, 3a, 3b) bewegend an diesem angebracht ist, wobei der auslenkbare Wandbereich (4) in Strömungsrichtung vor dem Ventil (5, 5a) angeordnet ist.

2. Elektrorheologischer Aktor (1) nach Anspruch 1, **dadurch gekennzeichnet, dass** eine Membran (4), insbesondere eine Rollmembran, den auslenkbaren Gehäusebereich bildet.

3. Elektrorheologischer Aktor (1) nach Anspruch 1 oder 2, **dadurch gekennzeichnet, dass** das elektrorheologische Ventil (5, 5a, 5b) in der Aktorkammer (11, 11a, 11b) angeordnet ist, und der auslenkbare Wandbereich (4) in der in Strömungsrichtung vor dem Ventil (5, 5a) liegenden Teilkammer (3a) angeordnet ist.

4. Elektrorheologischer Aktor (1) nach Anspruch 3, **dadurch gekennzeichnet, dass** die Elektroden (6, 6a, 6b) des elektrorheologischen Ventils in mehreren Ebenen im Vorzeichen alternierend und in geringem Abstand voneinander angeordnet sind, und einen mehrfach gewundenen Spalt (14) ausbilden.

5. Elektrorheologischer Aktor (1) nach Anspruch 3 oder 4, **dadurch gekennzeichnet, dass** die Elektroden (6, 6a, 6b) als Scheiben ausgebildet in der Aktorkammer (3, 3a, 3b) radial außen und quer zu dessen Drehsymmetrieachse angeordnet sind, wobei das Aktorgehäuse (11, 11a, 11b) bevorzugt zylinderförmig und die Elektroden (6, 6a, 6b) als Ringscheiben ausgebildet sind.

6. Elektrorheologischer Aktor (1) nach einem der vorhergehenden Ansprüche, **dadurch gekennzeichnet, dass** der den auslenkbaren Wandbereich (4) umgebende Aktorgehäusebereich (11b) zu einer axialen Führung des Kolbens (8) ausgebildet ist.

7. Elektrorheologischer Aktor (1) nach einem der vorhergehenden Ansprüche, **dadurch gekennzeichnet, dass** der Kolben (8) eine Schwungmasse trägt (9), die zusammen mit dem Kolben (8) in einer von der Aktorkammer (3) getrennten Kolbenkammer (16) angeordnet ist, wobei die Kolbenkammer (16) insbesondere begrenzt wird vom Aktorgehäuse (11, 11a, 11b) und einer daran befestigen Abdeckung (12).

8. Elektrorheologischer Aktor (1) nach einem der vorhergehenden Ansprüche, **dadurch gekennzeichnet, dass** zwei elektrorheologische Ventile (5a, 5b) vorgesehen sind, von denen eines in Strömungsrichtung vor und eines nach dem auslenkbaren Wandbereich (4) angeordnet ist.

9. Vorrichtung zur aktiven Schwingungsdämpfung mit einem in einem Hydraulikkreislauf (20) für elektrorheologische Flüssigkeit (22) angeordneten elektrorheologischen Aktor (1) nach einem der vorhergehenden Ansprüche, wobei vom Einlaß (2) zum Auslaß (7) eine elektrorheologische Flüssigkeit (22) durch den Aktor (1) strömt, weiterhin mit einer Spannungsversorgung (13), die die Elektroden (6) des elektrorheologischen Ventils (5) mit Spannung versorgt, mit einem Schwingungssensor (41, 41a, 41b), der die zu dämpfende Schwingung erfasst, und mit einer Steuereinrichtung (25, 25a, 25b), an die der Sensor (41, 41a, 41b) seine Sensordaten kommunizierend angeschlossen ist, wobei die Steuereinrichtung (25, 25a, 25b) zur Steuerung der Spannung der Elektroden (6) nach den erhaltenen Sensordaten ausgebildet ist

10. Vorrichtung nach Anspruch 9, **dadurch gekennzeichnet, dass** ein weiterer Schwingungssensor (44a, 44b, 44c) vorgesehen ist, ein Regelsensor, der die nach der Dämpfung noch verbleibende Schwingung erfassend angeordnet ist, und der seine Regelsensordaten an die Steuereinrichtung (25, 25a, 25b) kommunizierend an dieser angeschlossen ist, wobei die Steuereinrichtung (25, 25a, 25b) zur Regelung der Spannung der Elektroden (6) nach den Regelsensordaten ausgebildet ist.

11. Vorrichtung nach Anspruch 9 oder 10, **gekennzeichnet durch** mehrere elektrorheologischen Aktoren (1, 1a, 1b, 1c), die insbesondere einzeln gesteuert sind.

12. Vorrichtung nach einem der Ansprüche 9 bis 11, **dadurch gekennzeichnet, dass** eine Pumpe (21) den elektrorheologischen Aktor (1) mit konstantem Volumenstrom mit elektrorheologischer Flüssigkeit (22) versorgt

13. Vorrichtung nach einem der vorhergehenden Ansprüche 9 bis 12, **dadurch gekennzeichnet, dass** der Hydraulikkreislauf (20) geschlossen ausgebildet ist.

14. Vorrichtung nach Anspruch 13, **dadurch gekennzeichnet, dass** Hydrospeicher (24) im Hydraulikkreislauf (20) angeordnet sind.

15. Rotorlager mit mehreren Aktoren (1) nach einem der Ansprüche 1 bis 8, und insbesondere mit einer Vorrichtung nach Anspruch 11, **dadurch gekennzeichnet, dass** der Rotor (60) über ein Radiallager (61) auf mehreren drehsymmetrisch um die Rotorachse verteilt angeordneten Aktoren (1) gelagert ist.

## Claims

1. Electrorheological actuator (1, 1 a, 1 b, 1 c) for active vibration damping, comprising an actuator housing (11, 11 a, 11 b) which encloses an actuator chamber (3, 3a, 3b), the actuator housing (11, 11 a, 11 b) comprising an inlet (2) and an outlet (7), to which hydraulic lines can be connected in order to generate a volume flow of an electrorheological fluid along a flow path from the inlet (2), through the actuator chamber (3, 3a, 3b), to the outlet (7), the volume flow being controlled by an electrorheological valve (5, 5a, 5b) comprising electrodes (6, 6a, 6b) to which a voltage can be applied and which form capacitor surfaces and between which electrodes there remains a gap (14) which forms a part of the flow path, **characterised in that** a wall region (4) of the housing (11, 11 a, 11 b) is formed in a deflectable manner, and a piston (8) is attached to the deflectable wall region (4) outside the actuator chamber (3, 3a, 3b) so as to be movable on said region, the deflectable wall region (4) being arranged upstream of the valve (5, 5a) in the flow direction.

2. Electrorheological actuator (1) according to claim 1, **characterised in that** a diaphragm (4), in particular a roller diaphragm, forms the deflectable housing region.

3. Electrorheological actuator (1) according to either claim 1 or claim 2, **characterised in that** the electrorheological valve (5, 5a, 5b) is arranged in the actuator chamber (11, 11 a, 11 b) and the deflectable wall region (4) is arranged in the sub-chamber (3a) located upstream of the valve (5, 5a) in the flow direction.

4. Electrorheological actuator (1) according to claim 3, **characterised in that** the electrodes (6, 6a, 6b) of the electrorheological valve are arranged in a plurality of planes so as to alternate in terms of sign and so as to be at a small spacing from one another, and the electrodes form a gap (14) having a plurality of twists.

5. Electrorheological actuator (1) according to either claim 3 or claim 4, **characterised in that** the electrodes (6, 6a, 6b) are formed as discs and are arranged radially outwardly in the actuator chamber (3, 3a, 3b) and transversely to the rotational symmetry axis thereof, the actuator housing (11, 11 a, 11 b) preferably being formed as a cylinder and the electrodes (6, 6a, 6b) as annular discs.

6. Electrorheological actuator (1) according to any of the preceding claims, **characterised in that** the actuator housing region (11b) surrounding the deflectable wall region (4) is designed to axially guide the piston (8).

7. Electrorheological actuator (1) according to any of the preceding claims, **characterised in that** the piston (8) supports a flywheel (9), which is arranged together with the piston (8) in a piston chamber (16) which is separate from the actuator chamber (3), the piston chamber (16) in particular being defined by the actuator housing (11, 11 a, 11 b) and a cover (12) attached thereto.

8. Electrorheological actuator (1) according to any of the preceding claims, **characterised in that** two electrorheological valves (5a, 5b) are provided, of which one is arranged upstream of the deflectable wall region (4) in the flow direction and one is arranged downstream thereof in the flow direction.

9. Device for active vibration damping comprising an electrorheological actuator (1) arranged in a hydraulic circuit (20) for electrorheological fluid (22) according to any of the preceding claims, wherein an electrorheological fluid (22) flows from the inlet (2) to the outlet (7) through the actuator (1), further comprising a voltage supply (13) which supplies the electrodes (6) of the electrorheological valve (5) with voltage, a vibration sensor (41, 41 a, 41 b) which detects the vibration to be damped, and a control apparatus (25, 25a, 25b) to which the sensor (41, 41 a, 41 b) is connected in such a way as to communicate its sensor data, wherein the control apparatus (25, 25a, 25b) is designed to control the voltage of the electrodes (6) according to the sensor data received.

10. Device according to claim 9, **characterised in that** an additional vibration sensor (44a, 44b, 44c) is provided, a regulating sensor which is arranged so as to detect the vibration that remains following the damping and which is connected to the control apparatus (25, 25a, 25b) in such a way as to communicate its regulating sensor data thereto, the control apparatus (25, 25a, 25b) being designed to regulate the voltage at the electrodes (6) according to the data from the regulating sensor.

11. Device according to either claim 9 or claim 10, **characterised by** a plurality of electrorheological actuators (1, 1a, 1b, 1c) which are in particular controlled individually.

12. Device according to any of claims 9 to 11, **characterised in that** a pump (21) supplies the electrorheological actuator (1) with electrorheological fluid (22) at a constant volume flow rate.

13. Device according to any of the preceding claims 9 to 12, **characterised in that** the hydraulic circuit (20) is formed so as to be closed.

14. Device according to claim 13, **characterised in that** hydraulic accumulators (24) are arranged in the hydraulic circuit (20).

15. Rotor bearing comprising a plurality of actuators (1) according to any of claims 1 to 8, and in particular comprising a device according to claim 11, **characterised in that** the rotor (60) is mounted, by means of a radial bearing (61), on a plurality of actuators (1) which are distributed around the rotor shaft in a rotationally symmetrical manner.

## Revendications

1. Actionneur électrorhéologique (1, 1a, 1b, 1c) destiné à une atténuation active des vibrations, comportant un boîtier de l'actionneur (11, 11a, 11b) qui entoure une chambre de l'actionneur (3, 3a, 3b), ledit boîtier de l'actionneur (11, 11a, 11b) comportant une entrée (2) et une sortie (7), auxquelles peuvent être raccordées des conduites hydrauliques pour générer un débit volumétrique d'un liquide électrorhéologique le long d'une voie d'écoulement menant de l'entrée (2) à la sortie (7) en passant par la chambre de l'actionneur (3, 3a, 3b), le débit volumétrique étant contrôlé par une vanne électrorhéologique (5, 5a, 5b) avec des électrodes (6, 6a, 6b), qui peuvent être alimentées en tension et qui forment des surfaces de condensateurs et entre lesquelles subsiste une fente (14), qui forme un tronçon de la voie d'écoulement, **caractérisé en ce qu'**une zone de paroi (4) du boîtier (11, 11a, 11 b) de l'actionneur est réalisée sous forme déplaçable, et un piston (8) est fixé à la zone de paroi (4) déplaçable de manière à pouvoir se déplacer avec celle-ci hors de la chambre de l'actionneur (3, 3a, 3b), ladite zone de paroi (4) déplaçable étant disposée en amont de la vanne (5, 5a) par référence au sens d'écoulement.

2. Actionneur électrorhéologique (1) selon la revendication 1, **caractérisé en ce qu'**une membrane (4), en particulier une membrane roulante, forme la zone déplaçable du boîtier.

3. Actionneur électrorhéologique (1) selon la revendication 1 ou 2, **caractérisé en ce que** la vanne électrorhéologique (5, 5a, 5b) est disposée dans la chambre (11, 11 a, 11 b) de l'actionneur, et la zone de paroi (4) déplaçable est disposée dans la sous-chambre (3a) située en amont de la vanne (5, 5a) par référence au sens d'écoulement.

4. Actionneur électrorhéologique (1) selon la revendication 3, **caractérisé en ce que** les électrodes (6, 6a, 6b) de la vanne électrorhéologique sont disposées sur plusieurs niveaux en alternance par leur polarité et à faible distance les unes des autres, et forment une fente (14) multi-spiralée.

5. Actionneur électrorhéologique (1) selon la revendication 3 ou 4, **caractérisé en ce que** les électrodes (6, 6a, 6b), réalisées sous forme de disques, sont disposées dans la chambre de l'actionneur (3, 3a, 3b) radialement sur l'extérieur et transversalement à l'axe de symétrie de révolution de celle-ci, le boîtier (11, 11 a, 11 b) de l'actionneur étant de préférence cylindrique et les électrodes (6, 6a, 6b) étant réalisées sous forme de disques annulaires.

6. Actionneur électrorhéologique (1) selon l'une quelconque des revendications précédentes, **caractérisé en ce que** la zone (11 b) du boîtier de l'actionneur, entourant la zone de paroi (4) déplaçable, est réalisée pour un guidage axial du piston (8).

7. Actionneur électrorhéologique (1) selon l'une quelconque des revendications précédentes, **caractérisé en ce que** le piston (8) porte une masse mobile (9) qui, conjointement avec le piston (8), est disposée dans une chambre du piston (16), séparée de la chambre de l'actionneur (3), ladite chambre du piston (16) étant délimitée en particulier par le boîtier (11, 11 a, 11 b) de l'actionneur et par un couvercle (12) fixé à celui-ci.

8. Actionneur électrorhéologique (1) selon l'une quelconque des revendications précédentes, **caractérisé en ce qu'**il est prévu deux vannes (5a, 5b) électrorhéologiques, parmi lesquelles l'une est disposée, par référence au sens d'écoulement, en amont et l'autre en aval de la zone de paroi (4) déplaçable.

9. Dispositif permettant une atténuation active des vibrations, comportant un actionneur électrorhéologique (1) selon l'une des revendications précédentes, disposé dans un circuit hydraulique (20) pour un liquide électrorhéologique (22), un liquide électrorhéologique (22) circulant à travers l'actionneur (1) depuis l'entrée (2) vers la sortie (7), comportant en outre une alimentation en tension (13) qui alimente en tension les électrodes (6) de la vanne électrorhéologique (5), comportant un capteur de vibrations (41, 41 a, 41 b) qui détecte la vibration à atténuer, et comportant un dispositif de commande (25, 25a, 25b) auquel est raccordé le capteur (41, 41 a, 41) pour communiquer ses données, le dispositif de commande (25, 25a, 25b) étant configuré pour commander la tension des électrodes (6) en fonction des données obtenues du capteur.

10. Dispositif selon la revendication 9, **caractérisé en ce qu'**il est prévu un capteur de vibrations (44a, 44b, 44c) supplémentaire, un capteur de régulation qui est disposé pour détecter la vibration subsistant encore après l'atténuation, et qui, pour communiquer ses données au dispositif de commande (25, 25a, 25b), est raccordé à ce dernier, ledit dispositif de commande (25, 25a, 25b) étant configuré pour régler la tension des électrodes (6) en fonction des données du capteur de régulation.

11. Dispositif selon la revendication 9 ou 10, **caractérisé par** plusieurs actionneurs électrorhéologiques (1, 1a, 1 b, 1 c) qui sont commandés, en particulier, séparément.

12. Dispositif selon l'une quelconque des revendications 9 à 11, **caractérisé en ce qu'**une pompe (21) fournit à l'actionneur (1) électrorhéologique un liquide électrorhéologique (22) avec un débit volumétrique constant.

13. Dispositif selon l'une quelconque des revendications précédentes 9 à 12, **caractérisé en ce que** le circuit hydraulique (20) est un circuit fermé.

14. Dispositif selon la revendication 13, **caractérisé en ce que** des accumulateurs hydrauliques (24) sont disposés dans le circuit hydraulique (20).

15. Palier de rotor comportant plusieurs actionneurs (1) selon l'une des revendications 1 à 8 et comportant en particulier un dispositif selon la revendication 11, **caractérisé en ce que** le rotor (60) est monté par l'intermédiaire d'un palier radial (61) sur plusieurs actionneurs (1) répartis selon une symétrie de révolution autour de l'axe du rotor.
